# EUROPEAN PATENT SPECIFICATION

(11) **EP 1 123 675 B1**
(45) Date of publication and mention of the grant of the patent: **28.01.2004**
(21) Application number: 00102713.5
(22) Date of filing: 09.02.2000
(51) Int. Cl.: A47J 31/02, A47J 31/06

(54) **Infusion Tea Maker**
Gerät zum Aufbrühen von Tee
Appareil pour l'infusion de thé

(43) Date of publication of application: 16.08.2001
(73) Proprietor: Lin Tien, Yu-Mei, Taipei (TW)
(72) Inventor: Lin Tien, Yu-Mei, Taipei (TW)
(74) Representative: Viering, Jentschura & Partner

(56) References cited:
- DE-U- 8 135 217
- US-A- 5 632 194
- US-A- 5 813 317
- US-A- 5 826 493

## Description

### BACKGROUND OF THE INVENTION

### 1. Field of the Invention

The present invention relates to an infusion tea maker, and especially to an infusion tea maker for flushing coffee, tea, etc., and if desired, the user only necessary to place the cup body on a container, then the water in the cup can be controlled to leak out or stop, the present invention can be widely used in many container, moreover, the present invention can prevent to leak out due to a fault touch of the cup body.

### 2. Description of the Prior Art

In the prior art device for flushing water, the tea (or coffee) is directly put into a container and then hot water is added. After a few minutes, a fragrant tea water is formed. Since tea leaves and tea water are not isolated properly. Thus, the drinker often carelessly drinks the scraps of tea. Especially, the less the tea water, the more the tea left being drunk by drinker. Moreover, the fragrant of tea is exhausted rapidly, thus, it can not be flushed many times. Manufacturers have developed many kinds of infusion tea makers for properly isolating the tea leaves and tea water. These structures include an outer cup and an inner cup within the outer cup. The bottom of the inner cup has a tapered shape and a through hole is formed in the center portion thereof and a rolling ball water stopper located at the through hole. A filtering net is located thereon. A linkage extended to the exact lower side of the through hole is installed between one side of the inner cup and the bottom for flushing tea water. If desired, the linkage is pressed to eject the rolling ball, then the tea is filtered through a filtering net and then flows to the outer cup. Thus, a pure tea water is obtained. After the linkage is released, hot water may be added continuously, therefore, the tea can be flushed many times. However, no matter how the design is, the inner cup must be used with the outer cup, i.e., it can not be placed on the table for being used independently since once the inner cup is placed on the table, the rolling ball will be ejected out so that tea is drained out. That is, in using, it is impossible to pour tea from the outer cup, on the other hand, the inner cup serves to flush water for being used next time. Besides, since the material of the bottom of inner cup is made of plastics. Thus, in manufacturing, the sizes and the shapes of the rolling ball and the infusion tea maker can not be matched completely. Therefore, gaps will occur between the rolling ball and the through hole so that the water will pour out continuously. Moreover, since the structure is necessary to be arranged with linkage and spring and other components, thus not only it has a complex structure, but also the operation is also complex and it is easy to induce a fault. Especially, the inner cup and the outer cup must be used together. Therefore, as the upper half space of the outer cup is occupied by the inner cup, the space in the lower half for receiving water is finite. Thus, it can not be used in other container.

In order to solve the aforesaid problem, the applicant has invented a special infusion tea maker which is filed to the United States Patent Office with Patent No. 5,826,493 (the invention has also filed to German patent office with application No. 29910.068.5), "INFUSE COFFEE MAKER". Such a device can be used as an infusion tea maker. In the invention, an infusion tea maker includes a cover, a filer assembly, a dip cup, and a retaining plate. The dip cup has a central through hole at the bottom, and the filter assembly also has a through hole in the center. The bottom periphery of the drip cup extends downwards to form as extended wall which is provided with a spaced elongated holes and legs. The retaining plate includes a ferrule, a positioning rib element displaced inside and integrally connected to the ferrule, and spaced slots for receiving the legs of the drip cup. The ferrule is fitted below the drip cup within the space defined by the extended wall. The stop is inserted through the through holes of the drip cup into a hole in the center of the positioning rib element of the retaining plate. When the drip cup is placed on a planar surface, the ferrule slips downwards along the elongated hole due to it own weight. A liquid such as coffee poured into the drip cup causes the stop to be tightly held in the through holes of the drip cup to avoid leakage. When the drip cup is placed in a container, the ferrule or the retaining plate at the bottom of the drip cup is pushed upwards so that the stop disengaged from the through holes of the drip cup to allow discharge of coffee into the container below.

In general use, this novel structure has a good effect. While in testing, since it must be used in different container with different diameters, thus the diameter of the reflecting piece is larger than that of the container so as to protrude out of cup body. Therefore, as the cup body separates from the container, it is easily to be touch by the user or other peripheral device. Therefore, the stop will be ejected from a through hole to cause that water is leaked. This is a trouble to the user.

### SUMMARY OF THE INVENTION

Accordingly, the object of the present invention is to provide an infusion tea maker, wherein it is prevented that water is leaked out because the user touches the retaining plate by a mistake, and therefore, the safety of the infusion tea maker is improved.

Another object of the present invention is to provide an infusion tea maker, regardless of a descent due to a gravitational force or being ejected by other container, the retaining plate only moves within the space enclosing by the flange, no any structure exposes out of the flange. Therefore, the retaining plate will not be touched by the user or other outer article and thus, the roller is impossible to be ejected out to cause the water therewithin to pour out. Therefore, the safety of the infusion tea maker is insured.

The present invention will be better understood and its numerous objects and advantages will become apparent to those skilled in the art by referencing to the following drawings in which:

### BRIEF DESCRIPTION OF THE DRAWINGS

Fig. 1 is an exploded perspective view showing the structure of the present invention.
Fig 1A is an enlarge view showing the pad in Fig. 1.
Fig. 2 is a structural perspective view of the present invention.
Fig. 3 is an assembled structural perspective view showing that the present invention is placed on any plane so as to stop the leakage of water.
Fig. 3A is an enlarge view showing the stop and pad of Fig. 3.
Fig. 4 is an assembled structural cross sectional view showing that the present invention is flatly placed on any container to drain water out.
Fig. 4A is an enlarge view of the stop and pad in Fig. 4.
Fig. 5 is an assembled structural cross sectional view showing that in another embodiment, the present invention is flatly placed on any container to drain water out.

### DETAILED DESCRIPTION OF THE PREFERRED EMBODIMENT

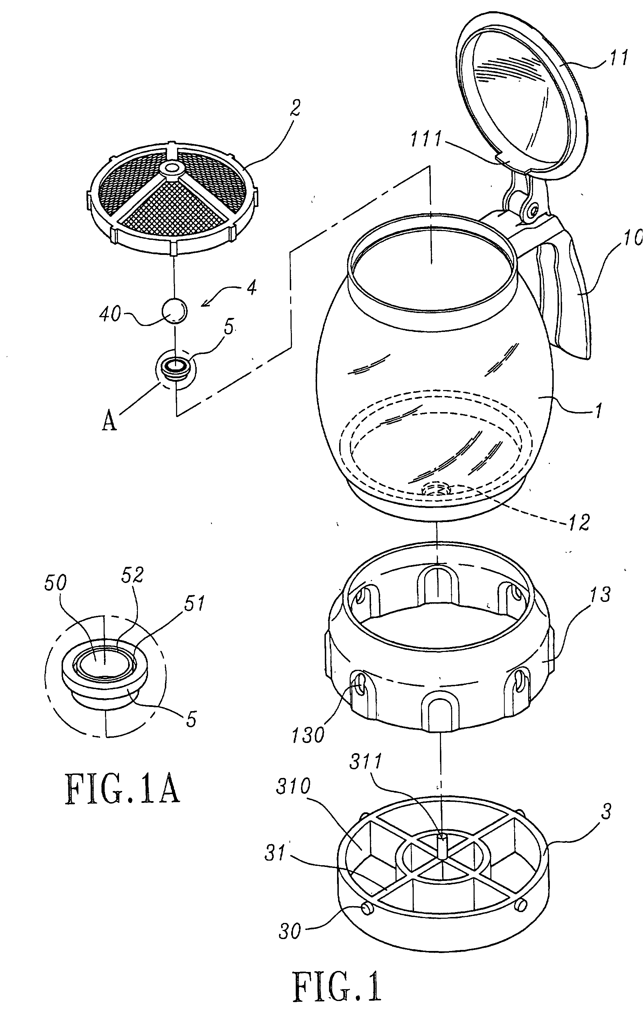

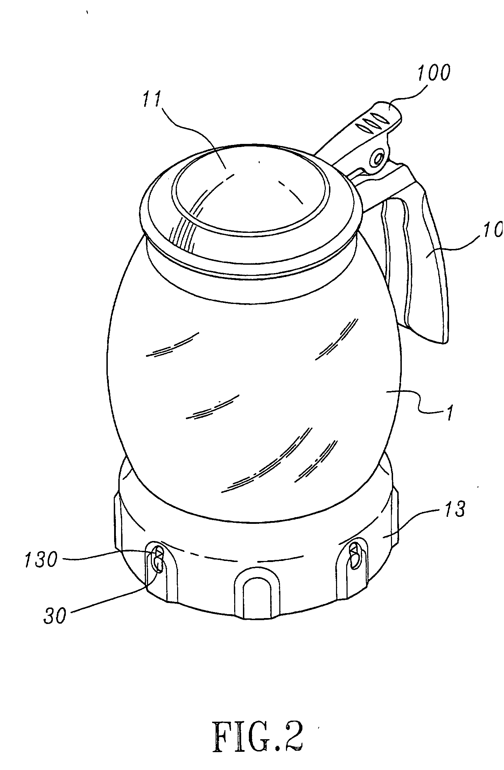

Referring to Figs. 1 and 2, the exploded perspective view and assembled perspective view of the infusion tea maker according to the present invention is illustrated. The infusion tea maker includes a cup body 1, a filter assembly 2, a retaining plate 3, a stop 4 and a pad 5 for stopping water.

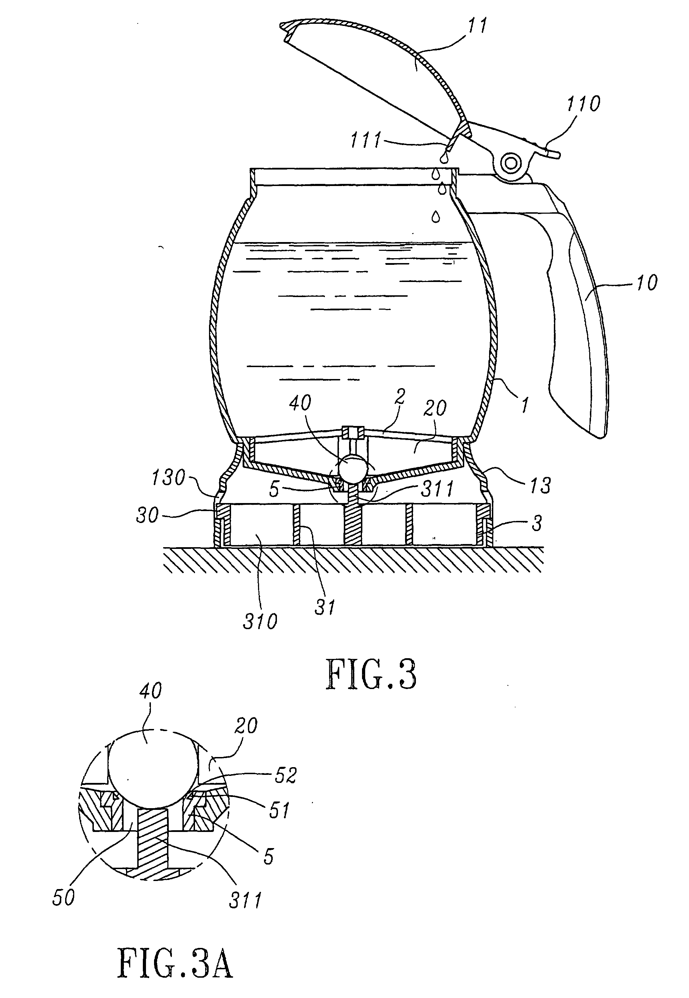

The cup body 1 has a cover 11 which is pivotally connected to the top of a handle 10 and can be opened by pressing a plate 110. The bottom of the cover 11 is installed with a flow guide 111 at a place adjacent to the pivotal connection. As the cover 11 is opened, the high temperature condensed water adhered to the bottom of the cup body 11 can flow back to the cup along the flow guide 111 without hurting the hand of the user, as shown in Fig. 3. A via hole 12 is formed at the center of the bottom of the cup body 1. An elastic pad 5 made of rubber can be inserted in the via hole 12, as shown in Fig. 1A. A thinner annular stop 52 is installed around a central through hole 50 by an annular trench 51. A stop 4 which may be embodied by a metal or resin roller 40 is placed on the through hole 50 and presses on the annular stop 52. Then the filter assembly 2 covers thereon for filtering. The bottom of the filter assembly 2 is extended with a positioning plate 20 surrounding the periphery of the roller 40 for confining the lateral movement of the roller 40, as shown in Fig. 3. Besides, the periphery of the bottom of the cup body 1 is extended downwards or is covered by an annular flange 13. A plurality of vertical long hole 130 is plurality of on the flange 13.

The retaining plate 3 has an outer diameter slightly smaller than the inner diameter of the flange 13, and has a height smaller than that of the flange 13. The retaining plate 13 can be received within the space enclosed by the flange 13. A plurality of pillars 30 are installed at the periphery of the retaining plate 3, which can be inserted into the respective long holes 130 in the flange 13 so that the retaining plate 3 may move longitudinally with respective to the cup body 1. Even it is descended to a lowest point without exposing below the flange 13. Moreover, a plurality of fixing ribs 31 are installed on the retaining plate 3 for spacing with a plurality of via holes 310. A post 311 can be located at the center, which can penetrate through the through hole 50 of the pad 5 for ejecting the roller 40 at a proper time.

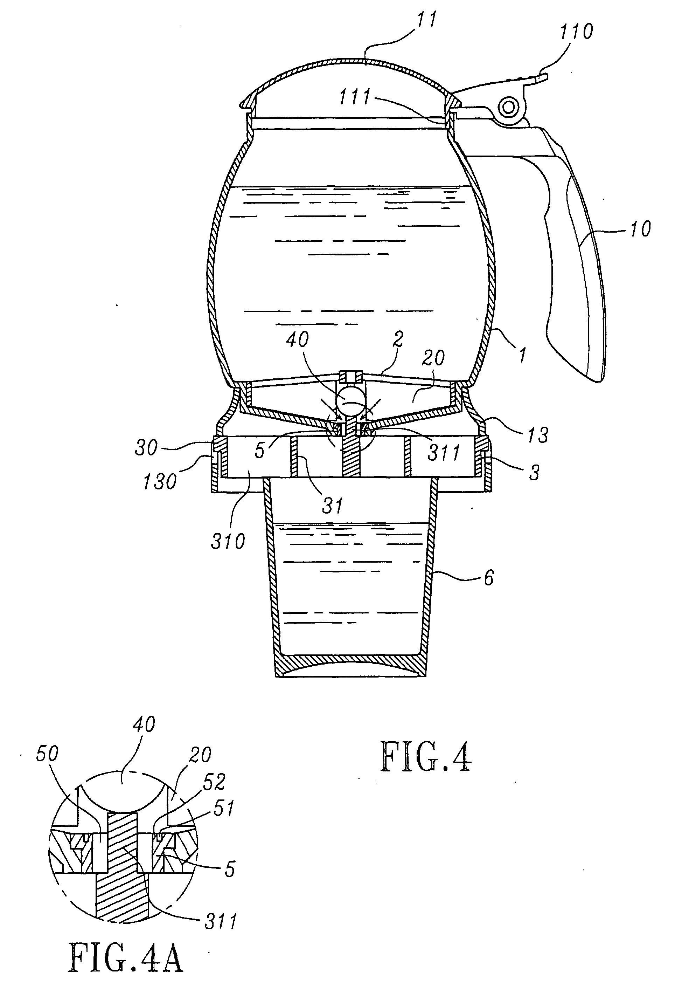

By aforesaid components, an infusion tea maker shown in Fig. 2 can be formed. Thereby, as shown in Fig. 3, when a cup body is flatly located on any plane, and coffee and hot water are filled into the cup body, by the supporting of the flange 13, the retaining plate 3 will descend due to the weight thereof so that the post 311 is reduced downwards from the through hole 50, therefore, the roller 40 presses the annular stop 52 of the pad 5 so as to tightly stuff the through hole 50, as shown in Fig. 3A, and therefore, water is stopped and coffee can be flushed. When water is desired to be taken out for drinking, as shown in Fig. 4, it is only necessary to place the cup body 1 to any container with an opening having a diameter smaller than that of the flange 13. The container 6 will eject upwards the retaining plate 3, and then the post 311 will eject the roller 40 to separate from the through hole 50, as shown in Fig. 4A. Thereby, the water will leak to the container 6 through the filter assembly 2. Therefore, the operation of the present invention is easy and conveniently. As a result, the user may pour water from the container 6 and on the other hand, the cup body 1 is placed at any plane for flushing water. The two operations can be performed simultaneously and independently. Moreover, since the cup body 1 is overlapped on any container 6 instead of putting within the container 6, no confinements about the volumes, sizes, and shapes to the cup body 1 and the container 6. Therefore, the cup body 1 can be employed in various containers as desired.

It should be noted that regardless of a descending due to gravitational force or being ejected by other container 6, the retaining plate 3 only moves within the space enclosing by the flange 13 , no any structure exposes out of the flange 13. Therefore, the retaining plate 3 will not be touched by the user or other outer article and thus, the roller 40 is impossible to be ejected out to cause the water therewithin to pour out. Therefore, the safety of the infusion tea maker is insured.

Furthermore, since the roller 40 presses on the thinner annular stop 52 with a high elasticity and deformation ability, therefore, the roller 40 can completely seal the through hole 50 so as to sufficiently compensate the gap due to a size error between the roller 40 and the through hole 50. As a result, a preferred water sealing is formed.

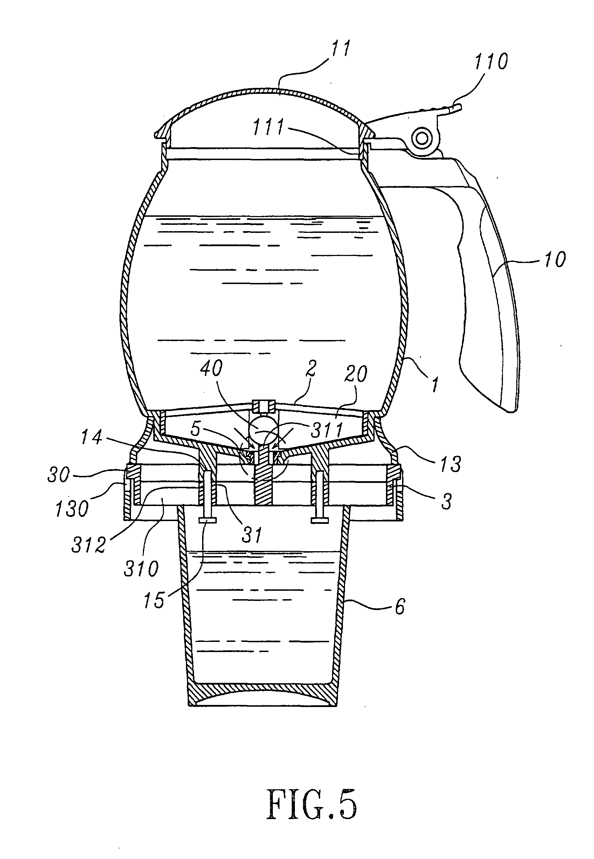

Besides, as shown in Fig. 5, another embodiment about the connection of the cup body 1 and the retaining plate 3 is illustrated, a plurality of symmetrically penetrating holes 312 and inserting holes 14 are disposed on the fixing ribs 31 of the retaining plate 3 and the corresponding places on the cup body 1 in order that a rod 15 with a height very longer than that of the fixing ribs 31 can penetrate through the penetrating hole 312 to be firmly secured to the inserting hole 14. As a result, similarly, the retaining plate 3 can move longitudinally with respective to the cup body 1.

Although the present invention has been described using specified embodiment, the examples are meant to be illustrative and not restrictive. It is clear that many other variations would be possible without departing from the basic approach, demonstrated in the present invention. Therefore, all such variations are intended to be embraced within the scope of the invention as defined in the appended claims.

## Claims

1. An infusion tea maker, comprising:
a cup body (1) with a through hole (12) at a center of a bottom thereof, a stop (4) for stuffing the through hole (12) and a filter assembly (2) for filtering water being placed on the through hole (12), a flange (13) with a proper height surrounding the bottom of the cup body (1);
**characterized by**:
a retaining plate (3) with an outer diameter smaller than an inner diameter of the flange (13), the retaining plate (3) being completely received within the space enclosed by the flange (13) and being capable of moving longitudinally in the space, the height of the retaining plate (3) being smaller than that of the flange (13) so that even if the retaining plate (3) descends to a lowest place, it will not expose out of the flange (13), a plurality of fixing ribs (31) being further installed on the retaining plate (3), and therefore, a plurality of via holes (310) being formed, and a post (311) being installed in the retaining plate (3), which can be inserted into the through hole (12) for ejecting the stop (4) at a proper time.

2. The infusion tea maker as claimed in claim 1, wherein a plurality of vertical long holes (130) are formed around the flange (13), and the periphery of the retaining plate (3) is installed with pillars (30) to be inserted into the respective long holes (130), therefore, the retaining plate (3) can be installed at the bottom of the cup body (1) and is movable upwards or downwards within the flange (13).

3. The infusion tea maker as claimed in claim 1, wherein each of the fixing ribs (31) of the retaining plate (3) is installed with a penetrating hole (312), while inserting holes (14) are installed at the bottom of the cup body (1) at positions with respect to the penetrating holes (312), nails (15) with a length larger than that of the fixing rib (31) pass through the penetrating holes (312) into the inserting holes (14) so that the retaining plate (3) is installed at the bottom of the cup body (1), and is movable in the flange (13).

4. The infusion tea maker as claimed in claim 1, wherein a soft elastic pad (5) in inserted in the through hole (12) at the bottom of the cup body (1).

5. The infusion tea maker as claimed in claim 1, wherein in the pad (5), at the periphery of the through hole (12) is formed with a trench so as to be formed with an annular stop (52) with a larger thickness.

6. The infusion tea maker as claimed in claim 1, wherein the stop is a roller (40).

7. The infusion tea maker as claimed in claim 1, wherein a bottom of the filter assembly (2) is further installed with a downwards extending positioning plate capable of enclosing the roller (40).

8. The infusion tea maker as claimed in claim 1, wherein a cover (11) is further installed at an opening of the cup body (1), which can cover the opening of the cup, another, a flow guide (111) which extends downwards is formed at a bottom of the cover (11) near a pivotal connection so that, as the cover is opened, the flow guide (111) can guide the high temperature condensed water to flow back to the cup body (1).

## Patentansprüche

1. Aufguß-Tee-Bereiter, welcher aufweist:
einen Behälterkörper (1) mit einem im Zentrum dessen Bodens angeordneten Durchgangsloch (12), einer Sperre (4) zum Verschließen des Durchgangslochs (12) und einer am Durchgangsloch (12) angeordneten Filtereinheit (2) zum Filtern von Wasser, wobei ein Flansch (13) mit einer geeigneten Höhe den Boden des Behälterkörpers (1) umgibt,
**gekennzeichnet durch**:
eine Rückhalteplatte (3) mit einem Außendurchmesser, welcher kleiner ist als der Innendurchmesser des Flansches (13), wobei die Rückhalteplatte (3) vollständig in dem von dem Flansch (13) umschlossenen Raum aufgenommen ist und innerhalb des Raumes longitudinal bewegbar ist, wobei die Höhe der Rückhalteplatte (3) kleiner als die des Flansches (13) ist, so daß die Rückhalteplatte (3), selbst wenn sie zu einem tiefsten Ort abgesenkt wird, sich nicht nach außerhalb des Flansches (13) erstreckt, wobei ferner eine Mehrzahl von Fixierrippen (31) an der Rückhalteplatte (3) angebracht sind und damit eine Mehrzahl von Durchgangs-Löchern (310) ausgebildet sind, und wobei eine Stange (311), welche zum Ausstoßen der Sperre (4) zu gegebener Zeit in das Durchgangsloch (12) eingeführt werden kann, an der Rückhalteplatte (3) angebracht ist.

2. Aufguß-Tee-Bereiter nach Anspruch 1, wobei eine Mehrzahl von vertikalen Langlöchern (130) rings des Flansches (13) ausgebildet sind, und wobei der Umfang der Rückhalteplatte (3) mit in die zugehörigen Langlöcher (130) einzuführenden Zapfen (30) versehen ist, wodurch die Rückhalteplatte (3) am Boden des Behälterkörpers (1) angebracht werden kann und nach oben oder nach unten innerhalb des Flansches (13) bewegbar ist.

3. Aufguß-Tee-Bereiter nach Anspruch 1, wobei
jede der Fixierrippen (31) der Rückhalteplatte (3) mit einem Durchdringloch (312) versehen ist, wobei
am Boden des Behälterkörpers (1) an den Durchdringlöchern (312) zugeordneten Positionen Einführlöcher (14) vorgesehen sind, wobei Nägel (15) mit einer Länge, welche größer ist als die Länge der Fixierrippen (31), durch die Durchdringlöcher (312) hindurch in die Einführlöcher (14) verlaufen, so daß die Rückhalteplatte (3) am Boden des Behälterkörpers (1) angebracht und innerhalb des Flansches (13) bewegbar ist.

4. Aufguß-Tee-Bereiter nach Anspruch 1, wobei ein weiches elastisches Einsatzstück (5) in das Durchgangsloch (12) am Boden des Behälterkörpers (1) eingesetzt ist.

5. Aufguß-Tee-Bereiter nach Anspruch 1, wobei an dem Füllstück (5) am Rand des Durchgangslochs (12) eine Rinne ausgebildet ist, um einen ringförmigen Stopper (52) einer größeren Dicke auszubilden.

6. Aufguß-Tee-Bereiter nach Anspruch 1, wobei die Sperre ein Rollkörper (40) ist.

7. Aufguß-Tee-Bereiter nach Anspruch 1, wobei der Boden der Filtereinheit (2) ferner mit einer sich nach unten erstreckenden Positionierplatte versehen ist, welche geeignet ist, den Rollkörper (40) einzuschließen.

8. Aufguß-Tee-Bereiter nach Anspruch 1, wobei an einer Öffnung des Behälterkörpers (1) ferner eine Abdeckung (11) angebracht ist, von welcher die Öffnung des Behälters abdeckbar ist, wobei am Boden der Abdeckung (11) in der Nähe einer schwenkbaren Verbindung eine sich nach unten erstreckende Flußführung (111) ausgebildet ist, so daß beim Öffnen der Abdeckung die Flußführung (111) das Kondenswasser hoher Temperatur zum Rückfluß in den Behälterkörper (1) führen kann.

## Revendications

1. Appareil pour l'infusion de thé, comprenant :
un récipient formant coupe (1) au fond duquel un trou de passage (12) est disposé en son centre, un obturateur (4) destiné à boucher le trou de passage (12) et un assemblage filtre (2) destiné à filtrer l'eau versée sur le trou de passage(12), une bride (13) de hauteur adéquate entourant le fond du récipient formant coupe (1),
**caractérisé par** :
une plaque de retenue (3) de diamètre extérieur plus petit qu'un diamètre intérieur de la bride (13), la plaque de retenue (3) étant reçue en totalité à l'intérieur de l'espace enfermé par la bride (13) et pouvant se déplacer longitudinalement dans cet espace, la hauteur de la plaque de retenue (3) étant inférieure à celle de la bride de sorte que même si la plaque de retenue (3) descend au plus bas, elle ne sorte pas hors de la bride (13), une pluralité de nervures de fixation (31) étant en outre montées sur la plaque de retenue (3), et donc, une pluralité de trous de traversée (310) étant formés, et un montant (311) étant disposé dans la plaque de retenue (3) et qui peut être inséré dans le trou de passage (12) afin d'éjecter l'obturateur (4) le moment venu.

2. Appareil pour l'infusion de thé selon la revendication 1, dans lequel une pluralité de trous longs verticaux (130) sont formés autour de la bride (13), et où le pourtour de la plaque de retenue (3) est muni de piliers de soutien (30) destinés à s'insérer dans les trous longs respectifs (130), la plaque de retenue (3) pouvant donc se monter au fond du récipient formant coupe (1) et pouvant monter et descendre à l'intérieur de la bride (13).

3. Appareil pour l'infusion de thé selon la revendication 1, dans lequel chacune des nervures de fixation (31) de la plaque de retenue (3) est munie d'un trou de pénétration (312), où des trous d'insertion (14) sont pratiqués au fond du récipient formant coupe (1) à des positions correspondantes aux trous de pénétration (312), des clous (15) de longueur supérieure que celle de la nervure de fixation (31) de passage les trous de pénétration (312) pour pénétrer dans les trous d'insertion (14) de façon à ce que la plaque de retenue (3) soit montée au fond du récipient formant coupe (1) et soit mobile dans la bride (13).

4. Appareil pour l'infusion de thé selon la revendication 1, dans lequel un tampon élastique mou (5) est inséré dans le trou de passage (12) placé au fond du récipient formant coupe (1).

5. Appareil pour l'infusion de thé selon la revendication 1, dans lequel le tampon (5) disposé à la périphérie du trou de passage (12) est muni d'une gorge de façon à ce qu'il comporte un butoir en anneau (52) de grande épaisseur.

6. Appareil pour l'infusion de thé selon la revendication 1, dans lequel l'obturateur est une boule (ou roulement) (40).

7. Appareil pour l'infusion de thé selon la revendication 1, dans lequel un fond de l'assemblage filtre (2) est⁻ en outre muni d'une bague descendante de positionnement susceptible d'enfermer la boule (ou roulement) (40).

8. Appareil pour l'infusion de thé selon la revendication 1, dans lequel un couvercle (11) est en outre monté sur une ouverture du récipient formant coupe (1) et qui peut recouvrir l'ouverture du récipient et où en outre, un guide d'écoulement (111) descendant est formé en bas du couvercle (11) à proximité d'un point de connexion pivotante, de façon à ce que lorsqu'on ouvre le couvercle, le guide d'écoulement (111) puisse guider l'eau de condensation à haute température pour qu'elle reflue vers le récipient formant coupe (1).
